# EUROPÄISCHE PATENTSCHRIFT

(11) **EP 2 524 124 B1**
(45) Veröffentlichungstag und Bekanntmachung des Hinweises auf die Patenterteilung: **04.04.2018**
(21) Anmeldenummer: 11700184.2
(22) Anmeldetag: 14.01.2011
(51) Int. Cl.: F01P 7/16, F16K 31/524, F01P 11/16, F01P 7/14

(54) **STEUERVENTILEINHEIT FÜR EINEN FLÜSSIGKEITSKREISLAUF**
CONTROL VALVE UNIT FOR A LIQUID CIRCUIT
ENSEMBLE SOUPAPE DE COMMANDE POUR UN CIRCUIT DE LIQUIDE

(30) Priorität: 14.01.2010 FR 1050238
(43) Veröffentlichungstag der Anmeldung: 21.11.2012
(73) Patentinhaber: Mann + Hummel GmbH, 71636 Ludwigsburg (DE)
(72) Erfinder: NOISEAU, Pascal, 53410 Saint Ouen des Toits (FR); WARNERY, Stéphane, 53970 L'Huisserie (FR); CORMERAIS, Mickael, 72540 Vallon-sur-Gée (FR)
(86) Internationale Anmeldenummer: PCT/EP2011/050458
(87) Internationale Veröffentlichungsnummer: WO 2011/086154

(56) Entgegenhaltungen:
- EP-A1- 1 529 937
- EP-A2- 0 165 395
- WO-A1-02/061516
- BE-A- 404 904
- DE-A1- 4 009 562
- DE-A1- 4 033 261
- JP-A- 57 135 218
- JP-U- S59 191 476

## Beschreibung

### Technisches Gebiet

Gegenstand der vorliegenden Erfindung ist eine Steuerventileinheit für einen Flüssigkeitskreislauf einer Brennkraftmaschine, insbesondere für einen Kühlflüssigkeitskreislauf einer Brennkraftmaschine.

Eine derartige Steuerventileinheit beinhaltet einerseits ein Ventilgehäuse aus einem oder mehreren Teilen, versehen mit einer Einlassöffnung, die mit einer Zulaufleitung verbunden ist, sowie mindestens zwei Auslassöffnungen, die jeweils mit einer Auslassöffnung verbunden sind und umfasst andererseits mindestens zwei mittels Steuereinrichtungen betätigte Verschlusselemente, um eine zugehörige Auslassöffnung gemäß einer vorab bestimmten Regel selektiv zu öffnen oder zu schließen oder deren Durchflussquerschnitt zu verändern, wenn ein Betriebsparameter oder ein Kennfeld aus verschiedenen Betriebsparametern die vorab bestimmten Werte erreicht.

Jedes Verschlusselement ist zwischen einer Öffnungsposition, in der es die Durchströmung der Flüssigkeit in die zugeordnete Auslassöffnung erlaubt, und einer Schließstellung in der es an einem Sitz aufliegt, um diese Durchströmung zu blockieren, stufenlos verstellbar.

### Stand der Technik

Herkömmliche Verbrennungsmotoren sind mit Thermostatventilen ausgestattet, die im Allgemeinen zwei oder drei Kanäle haben, mit denen der Durchlauf der Kühlflüssigkeit geregelt werden kann, insbesondere um den Verbrennungsmotor schneller auf Betriebstemperatur zu bringen, indem die Strömungsgeschwindigkeit dieser Flüssigkeit verlangsamt oder unterbunden wird, sobald ihre Temperatur unter einen voreingestellten Schwellenwert sinkt.

Derartige Thermostatventile, wie beispielsweise in der DE 3705232 C2 offenbart, bestehen meistens aus Wachsthermostaten in Einweg- oder Zweiwegeausführung. Ein Wachsthermostat besteht aus einer Halterung, aus einem Ventilsitz, aus einem Verschlusselement und aus einer kleinen Wachspille, die sein Hauptbestandteil ist. In kaltem Zustand liegt das Verschlusselement auf seinem Sitz auf und die Kühlflüssigkeit umströmt das Verschlusselement nicht. Wenn die Temperatur steigt, dehnt sich das Wachs aus und drückt auf das Verschlusselement, welches sich von seinem Sitz abhebt und somit die Kühlflüssigkeit am Verschlusselement vorbeiströmen lässt. Aufgrund ihrer Struktur besitzen die Wachsthermostate eine große Wärmeträgheit, was nur eine passive Regelung erlaubt.

Folglich ist ein erster Nachteil dieser Thermostate ihre lange Reaktionszeit, was dazu führt, dass die Temperaturschwelle der Kühlflüssigkeit, welche die Öffnung des Verschlusselementes herbeiführt, niedrig sein muss.

Um thermische Probleme zu vermeiden, die mit einer vorübergehenden Belastung des Motors zusammenhängen, ist sicherzustellen, dass sich der Wachsthermostat öffnet, bevor die Kühlflüssigkeit eine zu hohe Temperatur erreicht.

Aufgrund Schwankungen der Öffnungstemperaturschwelle kann mit den Wachsthermostaten keine hinreichend präzise Regelung erreicht werden, so dass mit derartigen Thermostaten eine Optimierung der Motorleistung hinsichtlich des Wärmemanagements nicht möglich ist.

Bisher steuern die Thermostaten die Durchströmung des Motorkühlers und eines zusätzlichen Bypasses, der erlaubt, den Motorkühler zu umgehen, während in anderen Strömungspfaden das Kühlmittel ständig strömt (zum Beispiel für die Innenraumheizung). Diese Verzweigung verlangsamt den Anstieg in Temperatur des Motors und wirkt sich nachteilig auf die Motorleistung und die Schadstoffemissionen während der Startphase des Motors aus.

Zur Behebung dieser Nachteile wurde unlängst vorgeschlagen, den Wachsthermostaten einen elektrischen Widerstand hinzuzufügen, um das Wachs zu erwärmen und so die Öffnung des Verschlusselements zu beschleunigen.

Ein derartiges Hinzufügen erhöht die Temperaturschwelle der Kühlflüssigkeit und somit die Wirksamkeit der Regelung; allerdings bleibt die Reaktionszeit des Thermostats relativ lang und die Präzision der Regelung insoweit ungenügend, als der elektrische Widerstand nur eine Hilfe für die Öffnung des Verschlusselements darstellt, aber nicht für seine Schließung, und wobei das Wachs immer noch eine starke Wärmeträgheit aufweist.

Ebenfalls bekannt ist, die Flüssigkeitskreisläufe mit Steuerventilen statt mit Wachsthermostaten auszustatten, insbesondere mit Steuerventilen, die mit rotierenden oder linearen Verschlusselementen ausgestattet sind.

Derartige Ventile müssen allerdings mit dynamischen Dichtungen, beispielsweise Wellendichtringen, ausgestattet sein, bei denen Probleme mit dem Management von Reibungskräften zwischen Ventilschaft und Ventilaufnahmebohrung auftauchen, die eine Überdimensionierung des Aktuators erforderlich machen, was die erforderliche Energie für die Steuerung erhöht oder zu einer Überdimensionierung des Verschlusselementes führt, was die Reaktionszeit der Verschlusselemente erhöht.

Aus der BE 404 904 A ist eine Steuerventileinheit für Systeme für die Regelung der Temperatur in einem Kühlkreislauf einer Brennkraftmaschine bekannt, bei dem ein Nocken einen Schließkörper eines Ventils bestätigt, wobei der Nocken durch einen Aktuator bewegt wird.

Die DE 40 33 261 A1 zeigt eine Vorrichtung zur Reduzierung des Kühlmittelmassenstromes einer Kühlmittelleitung einer Verbrennungskraftmaschine, bei der in einem Gehäuse mehrere Verschlusselemente angeordnet sind, die separat von je einem Stellelement betätigbar sind.

Der DE 40 09 562 A1 ist ein Thermostatventil zur Regelung der Temperatur eines flüssigkeitsgekühlten Verbrennungsmotors zu entnehmen, bei dem ein Stellglied ein Stellelement betätigt.

Aus der EP 0 165 395 A2 ist ein Regelventil für den Kühlmittelkreislauf eines Verbrennungsmotors bekannt, das die Kühlmittelströmung regelt und bei dem auf einem Ventilträger zwei Ventilteller angeordnet sind, wobei der Ventilträger durch ein Arbeitselement betätigt wird.

Die JP S59 191476 U zeigt eine Ventilsteuerung mittels einer Nockenscheibe, die zwei Nockenbahnen aufweist. Somit können zwei Fluidkreise über eine einzelne Nockenscheibe gesteuert werden.

Die WO 02/061516 A1 betrifft ein Verfahren zur thermischen Hydrolyse von Schlamm, wobei über eine Nockenwelle gesteuerte Ventile einem Reaktor Frischdampf zuführen.

### Offenbarung der Erfindung

Gegenstand der vorliegenden Erfindung ist es, eine Steuerventileinheit für einen Flüssigkeitskreislauf einer Brennkraftmaschine vorzuschlagen, insbesondere für eine Kühlflüssigkeit in einem Verbrennungsmotor, um diese Nachteile zu beheben, mit insbesondere einer sehr kurzen Schaltzeit für eine aktive Regelung der Öffnung, Schließung und der Verstellung der Verschlusselemente und mit der Möglichkeit, die Öffnung und Schließung von mehr als zwei Abflussleitungen zu steuern und somit die Strömungen zur thermischen Regulierung durch sämtliche Abflussleitungen, insbesondere während der Startphase des Motors, zu regeln, um die Aufwärmung des Motors zu beschleunigen, Emissionen zu senken und die Motorleistung zu steigern.

Dadurch wird die Wärmekapazität der Flüssigkeit besser genutzt und eine Verteilung des Flüssigkeitsstromes zwischen den verschiedenen zu temperierenden Baugruppen des Motors geregelt.

Ein weiterer Gegenstand der Erfindung ist es, eine Steuerventileinheit des oben genannten Typs vorzuschlagen, die sich durch eine besonders einfache und kompakte Bauweise unterscheidet, die aber dennoch dank fehlender translatorischer oder rotatorischer Dichtungen an den Verschlusselementen keine Probleme mit dem Management von Reibungskräften hat.

Zu diesem Zweck betrifft die Erfindung eine Steuerventileinheit für einen Flüssigkeitskreislauf einer Brennkraftmaschine, insbesondere für eine Kühlflüssigkeit in einem Verbrennungsmotor, die einerseits ein Ventilgehäuse mit mindestens einer Einlassöffnung, die mit mindestens einer Zulaufleitung verbunden ist, sowie mit mindestens zwei Auslassöffnungen, die jeweils mit einer Auslassleitung verbunden sind, und andererseits mindestens zwei Verschlusselemente beinhaltet, die mittels einer Steuereinrichtung betätigt werden, um die zugehörigen Auslassöffnungen gemäß einer vorab bestimmten Regel selektiv zu öffnen oder zu schließen, wenn ein Betriebsparameter die vorab bestimmten Werte erreicht, wobei jedes dieser Verschlusselemente zwischen einer maximalen Öffnungsposition, in welcher die Flüssigkeit in die zugehörige Abflussleitung fließen kann, und einer Schließposition, in welcher es auf einen Sitz gedrückt wird und so die Durchströmung blockiert, stufenlos verstellt werden kann.

Die Steuerventileinheit kann gleichwertig auch derart gestaltet sein, dass das Fluid durch mindestens zwei Einlassöffnungen in die Steuerventileinheit einströmt und Verschlusselemente den Zufluss steuern und das Fluid durch eine Auslassöffnung aus der Steuerventileinheit abströmt.

Erfindungsgemäß besteht eine derartige Ventileinheit aus mindestens einem verschiebbaren oder drehbaren Nocken oder einer rotierenden Nockenscheibe. Der Nocken oder die Nockenscheibe ist mit mindestens zwei Steuerbahnen ausgestattet, die jeweils einem Verschlusselement zugeordnet sind und jeweils auf mindestens einem, mit diesem Verschlusselement fest verbundenen Mitnehmerstift oder Ventilschaft wirken.

Erfindungsgemäß wird die Verschiebung der Nocken von mindestens einem Aktuator gesteuert, der direkt oder über eine Auswerte- oder Steuerelektronik mit einem oder mehreren, auf die Betriebsparameter empfindlich reagierenden Sensoren verbunden werden kann, beispielsweise einem Temperatursensor und/oder einem Positionssensor.

Eine derartiger Sensor überträgt ein Signal an die Auswerte- oder Steuerelektronik oder den Steueraktuator, der als Reaktion darauf den Nocken und somit die Verschlusselemente verstellt, um die Auslassöffnungen zu öffnen oder zu schließen, wenn der Betriebsparameter die vorab bestimmten Werte erreicht hat. Die Verstellung der Verschlusselemente kann auch stufenlos zwischen den Endlagen erfolgen als Reaktion auf sich kontinuierlich verändernde Betriebsparameter.

Der Steueraktuator für die Verschiebung oder Drehung des Nockens oder der Steuerscheibe und somit für die Öffnung und Schließung der Verschlusselemente, kann ein beliebiger Typ sein, ohne dass dadurch der Rahmen der Erfindung verlassen wird: elektrisch, pneumatisch, hydraulisch oder nach einem anderen Funktionsprinzip wirkender Aktuator.

Was die Verschlusselemente betrifft, so unterliegen diese im Allgemeinen einer linearen Bewegung in axialer oder radialer Richtung, und die Mitnehmerelemente können ständig in einfachem oder doppeltem Kontakt mit dem zugeordneten Steuerkreis der Nocke oder der Steuerscheibe sein.

Ein erheblicher Vorteil der erfindungsgemäßen Steuerventileinheit besteht darin, dass es in Schließposition eine fluiddichte Abdichtung ohne interne dynamische Dichtungen, beispielsweise einem Wellendichtring, zwischen den Verschlusselementen und den Auslassleitungen garantiert. Lediglich zwischen der Welle zwischen Aktuator und Nocken und dem Ventilgehäuse ist eine dynamische Dichtung eingebaut zur Abdichtung der flüssigkeitsführenden Innenseite zur Umgebung. An der Stelle sind jedoch die Reibungskräfte gering und leicht zu managen.

Je nach den Dichtheitsanforderungen an die geschlossene Ventilstellung können die Verstellelemente mit einfachen Dichtungen ausgestattet werden. Gemäß einer Ausführungsform der Erfindung kann zum Beispiel jede Verschlussvorrichtung mit einer montierten Dichtung (O-Ringdichtung, Formdichtung) oder einer direkt an die Verschlusselemente angespritzten elastischen Dichtmasse ausgerüstet werden.

Eine alternative Ausführung ist die Abdichtung auf dem feststehenden Ventilsitz am Ventilgehäuse durch ein Anspritzen von elastischer Dichtmasse oder durch die Montage einer Dichtung auf diesem Ventilsitz.

Als Werkstoff für die Dichtung eignet sich besonders Ethylen-Propylen-Dien-Kautschuk (EPDM), Hydrierter Acrylnitrilbutadien-Kautschuk (HNBR) oder Silikon.

Ein weiterer erheblicher Vorteil der erfindungsgemäßen Steuerventileinheit besteht darin, dass die Öffnungs- und Schließbedingungen der Auslassöffnungen durch eine Veränderung der Steuerbahn des Nocken oder der Nockenscheibe leicht geändert werden können. Auch die Form des Ventilsitzes oder die Form des Ventils selbst können variiert werden. So sind auf einfache Weise Anpassungen, z.B. an verschiedene Motorvarianten möglich, ohne die Steuerventileinheit an sich zu ändern. Auch wird die Applikation der Steuerventileinheit während der Entwicklungsphase einer Brennkraftmaschine erleichtert.

Der dynamische Verlauf der Änderung des durchströmten Querschnitts kann während der Verstellung der Verschlussvorrichtung bei Öffnung/Schließung jedes Bereiches gemäß den thermischen Anforderungen der Brennkraftmaschine optimiert werden, was insbesondere bei herkömmlichen linearen oder drehbaren Verschlusselementen schwierig ist.

Nach einer bevorzugten Eigenschaft der Erfindung kann die Form der Verschlusselemente unterhalb des Ventilsitzes eine gekrümmte Form haben, beispielsweise eines Wulstes, um einen progressiven Steuerverlauf des Systems zu erreichen. Dieser Effekt kann auch durch entsprechende geometrische Ausgestaltung des Ventilsitzes gegenüber dem Verschlusselement verwirklicht werden. Durch die Gestaltung der Krümmung(en) des Ventilkörpers kann die dynamische Querschnittsveränderung beliebig gestaltet werden.

Gemäß eines vorteilhaften Merkmals der Erfindung ist das Steuerventil so ausgebildet, dass die Kraft der statischen und dynamischen Drücke, die durch die durchströmende Flüssigkeit auf die Verschlusselemente ausgeübt wird, dazu tendiert, diese Elemente in ihre Schließposition zu drücken.

Mit einer derartigen Konfiguration können die Antriebskräfte weitgehend reduziert werden, das heißt, die Einbaumaße und der Energieverbrauch des Aktuators können verringert werden. Gleichzeitig können das Untersetzungsverhältnis und folglich die Reaktionszeit des Ventils reduziert werden.

Gemäß einer weiteren vorteilhaften Ausgestaltung der Erfindung arbeitet jedes der Verschlusselemente mit einer Rückstellfeder zusammen, die geeignet ist, es kraftschlüssig gegen seinen Sitz in Schließposition zu halten.

Sofern die Verschlusselemente dazu tendieren, unter dem Einfluss des auf sie ausgeübten Drucks der durchströmenden Flüssigkeit in ihre Schließposition gedrückt zu werden, müssen diese Rückstellfedern diesen Druck nicht überwinden, sondern sie wirken in die gleiche Richtung wie der Druck, um die Abdichtung in der Schließposition zu garantieren.

Erfindungsgemäß haben die Rückstellfedern ebenfalls die Funktion, die Führung der Mitnehmerstifte zu erleichtern und die hinnehmbaren Fertigungstoleranzen zu erhöhen.

Erfindungsgemäß ist der Mitnehmerstift eines jeden Verschlusselementes auf beiden Seiten dieses Elementes in zwei fest mit dem Gehäuse verbundene Führungslager eingebaut, wobei bei mindestens einem dieser Führungslager ein radiales Spiel vorgesehen ist, um dem zugeordneten Verschlusselement zu ermöglichen, Fluchtungsabweichungen oder Orientierungsfehler des Sitzes zu kompensieren, die in der Schließposition Leckagen an der Dichtstelle nach sich ziehen können.

Alternativ kann bei jedem der Führungslager der Mitnehmerstifte ein Spiel vorgesehen sein.

Als mögliche Variante kann ebenfalls ein derartiges Spiel bei dem vom Nocken am weitesten entfernten Führungslager vorgesehen werden, das heißt dem Nocken gegenüberliegend, bezogen auf das Verschlusselement.

Gemäß dieser Variante ermöglicht eine ringförmige Kontaktfläche zwischen den Mitnehmerstiften und dem Führungslager, das dem Nocken am nächsten liegt, oder mit einem kugel- oder halbkugelförmigen Lager ausstattete Mitnehmerstifte, die Fluchtungsabweichungen der Mitnehmerstifte, hervorgerufen durch die durch das Nockenprofil bedingten Tangentialkräfte oder die Orientierungsfehler des Sitzes der Verschlusselemente, zu kompensieren.

Zum Ausgleich von Toleranzen in dem Steuerventilgehäuse können in einer vorteilhaften Ausführungsform die Verschlusselemente zweiteilig ausgeführt sein in der Art, dass im Bereich des Mitnehmerstiftes oder direkt im Bereich der Abdichtungsstelle ein Gelenk angeordnet ist, welches die Druckkräfte von der Nockenscheibe auf die Dichtstelle übertragen kann aber Winkelabweichungen zulässt. Eine vorteilhafte Ausgestaltung eines solchen Gelenkes ist ein halbkugelförmiges Ende eines Teils des Mitnehmerstiftes, der in einem pfannenartigen Gegenstück gelagert ist.

In einer alternativen Ausführungsform der Erfindung kann der Mitnehmerstift der Verschlussvorrichtung durch ein starres Einlegeteil verstärkt werden. Insbesondere im Falle einer Verschlussvorrichtung oder eines Mitnehmerstiftes aus Kunststoff kann durch ein starres Einlegeteil, vorzugsweise aus einem Material, welches kriechunempfindlich und auch unter Wärmeeinfluss formstabil ist, das Bauteil verstärkt werden.

Erfindungsgemäß können die Sensoren und der Aktuator eine gemeinsame elektrische Anschlusstechnik haben.

Die Art der Verbindung zwischen dem Aktuator und dem Nocken kann ebenfalls beliebig sein ohne deswegen den Rahmen der Erfindung zu verlassen.

Gemäß eines weiteren Merkmals der Erfindung besteht der Nocken aus einem Ritzel oder einer linearen Zahnstange. Der Aktuator ist mit dieser über einen Schneckenantrieb verbunden, so dass die Achse des Aktuators tangential zum Nocken verläuft, was der Positionierung dieses Elementes großen Spielraum bietet.

Je nach Umgebungsbedingungen oder Betriebszustand des Verbrennungsmotors kann es gegenüber einer lediglich starren Nockensteuerung von Vorteil sein, über eine variable Steuerung der Verschlussvorrichtungen zu verfügen. So verfügen in einer alternativen Ausführungsform der Erfindung die Nocken über eine oder mehrere Aktivierungsmethoden, die auf eine oder mehrere Nockenbahnen (für die Rotationsnocken) oder Linearsektoren (für translatorische Verstellung) wirken.

Gemäß einer anderen Ausführungsform der Erfindung sind ein oder mehrere Bahnen des Nockens gegeneinander verstellbar, um die Position einer Verschlussvorrichtung beeinflussen zu können, indem diese die anderen Verschlussvorrichtungen nach dem vorher bestimmten Nockenverlauf steuert.

Nach einer anderen Ausführungsform der Erfindung können ein oder mehrere Bahnen des Nockens der Steuereinrichtung relativ zueinander verschoben werden, um die Steuereinrichtung an besondere Betriebsbedingungen anpassen zu können. Eine oder mehrere Nocken oder Steuerbahnen sind einzeln auskoppelbar, so dass nur einige der Verschlusselemente aktiviert sind oder sich das Steuerverhalten der einzelnen Verschlusselemente bezogen auf den Nocken verändert.

In einer weiteren Ausführungsform kann die Nockenscheibe oder der lineare Nocken in Richtung der Bewegungsrichtung der Verschlusselemente verstellt werden, so dass sich die Stellung der Verschlusselemente relativ zueinander nicht ändert, wohl aber die Spalthöhe bzw. der Durchflussquerschnitt zwischen Verschlusselement und Ventilsitz. Dies kann mit einem zweiten Aktuator (elektrisch, magnetisch oder auch mit einem Wachsdehnelement) erfolgen.

Diese verschiedenen Ausführungsformen sind besonders vorteilhaft, wenn eine Teilströmung des Gesamtkreislaufes hinsichtlich besonderer Umwelt- oder Betriebsbedingungen anzupassen ist. Zum Beispiel kann man die Betriebsart für Warmländer anpassen in der Art, dass die Motorkühlung bevorzugt und das Heizen des Innenraums reduziert wird. Umgekehrt kann eine Betriebsart für Kaltländer appliziert werden, die die Innenraumheizung bevorzugt sicher stellt.

In einer weiteren Ausführungsform ist vorgesehen, einen Positionssensor zur Detektion der tatsächlichen Stellung der Nocken einzusetzen. Ein am Gehäuse angebrachter Hall-Sensor liefert ein Signal an eine Steuerelektronik, die eine Nachregulierung der Nocken ermöglicht. Der Hall-Sensor korrespondiert mit einem Magneten, der an der Nockenscheibe oder einem linear verstellbaren Nocken oder der Antriebswelle oder anderer geeigneter Stelle angebracht ist. Auf diese Weise ist eine berührungslose Detektierung der Stellung der Verschlusselemente vom flüssigkeitsumströmten Innenraum ohne Durchführung von Leiterbahnen durch die Gehäusewand hindurch auf der Außenseite des Gehäuses möglich.

Eine bevorzugte Ausführungsform der Erfindung ergibt sich in der Ausführung einer Spielpassung zwischen Nocken und Ventilsitz in der geschlossenen Ventilstellung. Dieses Spiel erzeugt eine Unstetigkeit in dem Kraftaufwand, der für die Öffnung der Verschlussvorrichtungen notwendig ist. Somit erlaubt die Erfindung, durch Analyse des Signals der Leistungsaufnahme der Ventilsteuerung, den Öffnungsgrad der Verschlussvorrichtungen festzustellen. Die Erfindung erlaubt eine Anpassung der Einstellung des Beginns bzw. ein Nachstellen der stufenlos verstellbaren Öffnung der Verschlussvorrichtungen als selbstlernendes System über die Produktlebensdauer auszuführen. Diese Anpassung wird vorzugsweise nach dem Abstellen des Motors erfolgen, damit der Druck im System die Analyse nicht beeinflusst. Die Anpassung erfolgt in wenigstens einer Bewegung des Systems für den ganzen oder einem Teil des Hubweges. Sie kann in die Elektronik der Motorsteuerung oder in die interne Elektronik des Aktuators integriert werden. Sie kann sich durch Analyse der Leistungsaufnahme des Aktuators, durch Analyse des PWM-Signals (PWM = Pulsbreiten-Modulation) oder durch jede andere Verfahrensweise der Analyse des Signals machen.

Wird die Steuerventileinheit zusammen mit einem Temperatursensor eingesetzt, kann dieser vorteilhaft zwischen Steuerventil und Motorblock oder zwischen Steuerventil und Kühlflüssigkeitspumpe angeordnet sein. Um auch ein Signal über die Kühlwassertemperatur während der Schließstellung der Verschlussvorrichtungen zu bekommen, ist in einer vorteilhaften Ausführungsform eine in die Motorsteuerung oder in eine intelligente Steuereinheit integrierte Regelung vorgesehen, die die Verschlussvorrichtung zeitweise öffnet, um Flüssigkeit aus dem Kühlkreislauf an dem Sensor zu führen.

Alternativ ist ein Bypass-Kanal vorteilhaft, durch den permanent Flüssigkeit an dem Temperatursensor vorbeiströmt, um ein kontinuierliches Temperatursignal zu bekommen.
Um eine Beschädigung der Brennkraftmaschine während einer unwahrscheinlichen aber nicht ganz auszuschließenden Fehlfunktion der Steuerventileinheit oder der Brennkraftmaschine zu vermeiden, kann ein Verschlusselement mit einer Fail-Safe-Funktion vorgesehen sein, dass bei einer Störung in eine vorgegebenen Schließ- oder Öffnungsposition einnimmt.

Für die Ausgestaltung des Gehäuses der Steuerventileinheit sowie der Nocken und der Verschlusselemente kommen verschiedene geeignete Materialien in Betracht, insbesondere Kunststoff. Bevorzugte Materialien sind PA66 und/oder PPS, die Füllstoffe und Stabilisatoren enthalten können zur Verbesserung der Medienbeständigkeit und der Formstabilität.

Das Gehäuse der Steuerventileinheit kann aus mehreren Gehäuseteilen zusammengesetzt sein, die vorzugsweise im Kunststoffspritzgussverfahren hergestellt sind. Bei der Verwendung von Kunststoff als Gehäusewerkstoff sind die Gehäuseteil vorzugsweise zu einem Gesamtgehäuse verschweißt, insbesondere durch Heizelementschweißen oder durch Heißgasschweißen.

Die erfindungsgemäße Steuerventileinheit kann sowohl strömungsaufwärts wie auch strömungsabwärts der Brennkraftmaschine angeordnet sein. In den beschriebenen Ausführungsbeispielen ist das Steuerventil strömungsabwärts der Brennkraftmaschine angeordnet.

Die erfindungsgemäße Steuerventileinheit kann in einer alternativen Anwendung auch eine Ventileinheit zur Regelung anderer Flüssigkeitskreisläufe einer Brennkraftmaschine eingesetzt werden, beispielsweise zur Steuerung des Schmierölkreislaufes.

Die erfindungsgemäße Steuerventileinheit kann in einer weiteren Anwendung eine Steuerventileinheit für einen Flüssigkeitskreislauf zur Wärmeregulierung einer Brennstoffzelleneinheit sein, die ebenfalls unter die Definition einer Brennkraftmaschine fällt.

### Kurze Beschreibung der Zeichnungen

Die Merkmale der Steuerventileinheit, die Gegenstand der Erfindung ist, werden detaillierter erklärt unter Bezugnahme auf die beigefügten Zeichnungen, in denen
- die Figur 1 eine perspektivische Ansicht einer erfindungsgemäßen Steuerventileinheit ist,
- die Figur 2 eine perspektivische Explosionsansicht der Steuereinrichtung mit den zugehörigen Verschlusselementen ist,
- die Figur 3 ein Längsquerschnitt durch die Steuerventileinheit ist,
- die Figuren 4a bis 4d Schemata sind, welche verschiedene Einbausituationen eines Verschlusselementes darstellen,
- die Figuren 5a bis 5d verschiedene Ausführungsformen der Verschlusselemente zeigen,
- die Figur 6 eine Nockenscheibe zur Verstellung der Verschlusselemente in einer perspektivischen Einzelansicht zeigt,
- die Figur 7 einen Schnitt durch die Verstelleinheit der Steuerventileinheit darstellt,
- die Figur 8 schematisch eine Ausführungsform der Steuerventileinheit mit drei Einlassöffnungen und einer gemeinsamen Auslassöffnung darstellt.
Gleiche Gegenstände sind in allen Figuren mit den gleichen Bezugszeichen bezeichnet.

### Ausführungsform(en) der Erfindung

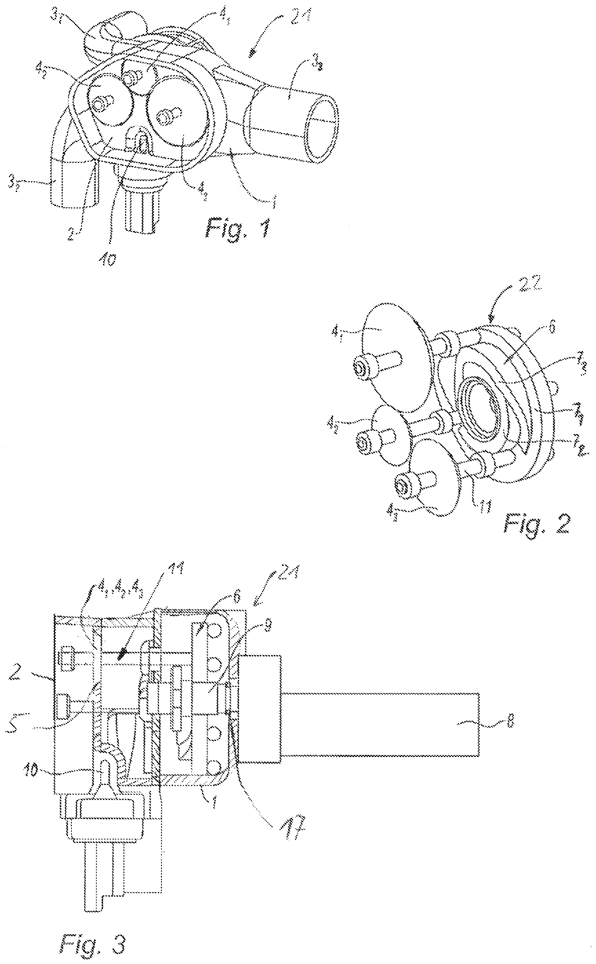

In der Ausführungsform gemäß Figur 1 umfasst die Steuerventileinheit (21) ein Gehäuse 1, hergestellt aus drei Teilen, das eine schematisch dargestellte Einlassöffnung 2, sowie drei Auslassöffnungen 31, 32, 33 umfasst, die jeweils mit einer Abflussleitung für diese Flüssigkeit verbunden sind. Die Einlassöffnung 2 kann direkt an einen entsprechenden Gegenflansch am Motorblock (nicht dargestellt) dichtend angeflanscht sein, so dass ein einfach gestaltetes Gehäuse 1 der Steuerventileinheit ausgebildet werden kann und eine separate Verbindungsleitung vom Gehäuse 1 zum Motorblock entfällt.

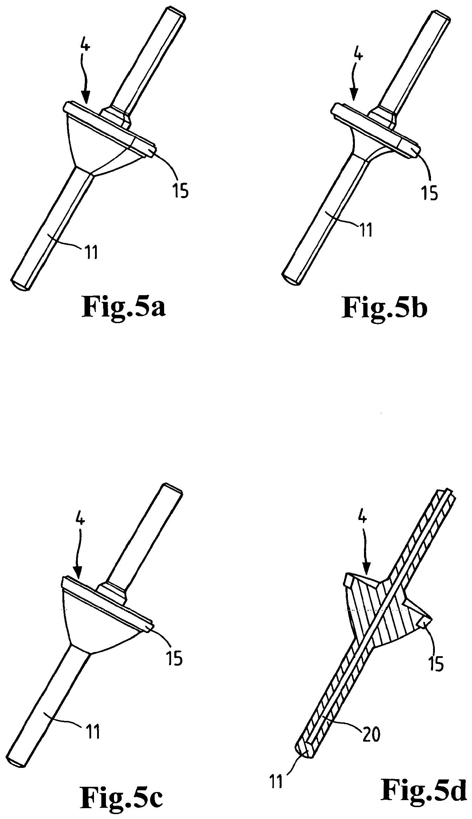

Die Auslassöffnungen 31, 32, 33 können jeweils durch ein kreisförmiges, in den Figuren 2 und 5 genauer dargestelltes Verschlusselement 41, 42, 43 geschlossen werden.

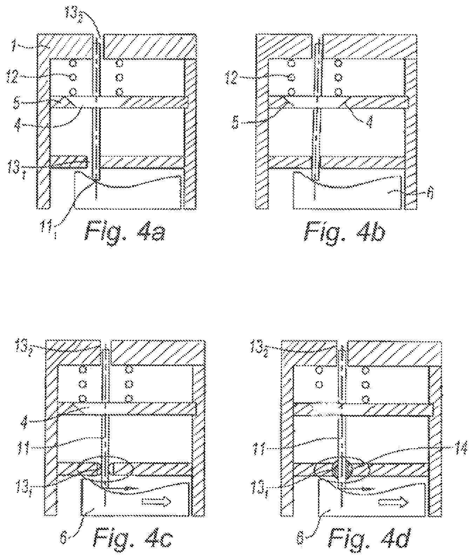

Die Verschlusselemente 41, 42, 43 sind zwischen einer Öffnungsposition, in der die Flüssigkeit durch die Auslassöffnungen 31, 32, 33 in die zugeordneten Auslassleitungen strömt, und einer Schließstellung verstellbar, in der sie an einem zugeordneten Sitz 5 aufliegen, der fest mit dem Gehäuse 1 (dargestellt in den Figuren 4a bis 4d) verbunden ist, um diese Strömung zu beeinflussen. Stromaufwärts der Verschlusselemente 41, 42, 43 ist ein Sensor 10 derart angeordnet, das er in Kontakt mit der Flüssigkeit steht.

Die Figur 2 zeigt die Steuereinrichtung 22 in einer Ausführung als Nockenscheibe mit den drei Steuerbahnen 71, 72, 73. Die Steuereinrichtung 22 steuert die stufenlose Verstellung der Verschlusselemente 41, 42, 43 zwischen einer Öffnungsposition und einer Schließposition durch einen drehbaren Nocken (6) der mit drei Steuerbahnen 71, 72, 73 ausgestattet ist, die jeweils einem Verschlusselement 41, 42, 43 zugeordnet sind.

Wie der Figur 3 zu entnehmen ist, wird die Rotation des Nockens 6 von einem Aktuator 8 gesteuert, der mit einem Zahnradsatz auf eine Abtriebswelle 9 wirkt, so dass sich die Abtriebswelle 9 und folglich der Nocken 6 mit einer voreingestellten Geschwindigkeit drehen. Der Wellendichtring 17 zwischen Gehäuse 1 und der Abtriebswelle 9 ist die einzige dynamische Dichtung der Steuerventileinheit. Der Aktuator 8 ist über eine nicht dargestellte Steuerelektronik mit einem Temperatursensor 10 verbunden, der ständig ein aussagekräftiges Signal über den Temperaturwert der Flüssigkeit übermittelt, die durch die Einlassöffnung 2 eintritt. Als Reaktion auf dieses Signal steuert der Aktuator 8 die Rotation des Nockens 6 und folglich die Stellung der Verschlusselemente 41, 42, 43.

Präziser ausgedrückt und gemäß Figur 2 ist jedes der Verschlusselemente 41, 42, 43 mit einem Mitnehmerstift (11) verbunden. Ein Ende der Mitnehmerstifte 11 ist ständig in Kontakt mit der zugeordneten Steuerbahn 7 des Nockens 6, um die Verstellung der Verschlusselemente 41, 42, 43 zu steuern.

Gemäß den Figuren 4a bis 4d ist jedes der Verschlusselemente 4 mit einer Feder 12 gespannt, die geeignet ist, es kraftschlüssig gegen seinen Sitz 5 in Schließposition zu halten, um in diesem Bereich die Abdichtung zu garantieren. Der Mitnehmerstift 11 jedes der Verschlusselemente 41, 42, 43 ist auf beiden Seiten dieses Elementes in zwei Führungslagern 131, 132 gehalten, die fest mit dem Gehäuse 1 verbunden sind.

Gemäß den Figuren 4a und 4b ist ein Spiel für jedes der Führungslager 131, 132 der Mitnehmerstifte 11 vorgesehen. Wie in Figur 4a dargestellt, ermöglicht ein derartiges Spiel der Feder 12, eine Fluchtungsabweichung der Mitnehmerstifte 11 zur Betätigungsrichtung zu kompensieren. Wie in Figur 4b dargestellt, ermöglicht ein derartiges Spiel der Feder 12 ebenfalls, einen Winkelfehler des Sitzes 5 des Verschlusselementes 41, 42, 43 oder eine Winkelabweichung zwischen Verschlusselement 41, 42, 43 und Mitnehmerstift 11 zu kompensieren.

Gemäß den Figuren 4c und 4d ist ein Spiel nur bei dem vom Nocken 6 am weitesten entfernten Führungslager 132 vorgesehen, d.h. dem Nocken gegenüberliegend bezogen auf das Verschlusselement 4. Figur 4c zeigt einen ringförmigen Linienkontakt zwischen dem Mitnehmerstift 11 und dem Führungslager 131, das dem Nocken 6 am nächsten liegt. Gemäß Figur 4d ist der Mitnehmerstift 11 mit einem kugelförmigen Lager 14 an dem Führungslager 131, das dem Nocken 6 am nächsten liegt, ausgestattet. Diese Konfigurationen ermöglichen es auch noch, eine Fluchtungsabweichung des Mitnehmerstiftes 11 oder eine schlechte Orientierung des Sitzes 5 eines Verschlusselementes 41, 42, 43 zu kompensieren.

Die Figuren 5a bis 5d zeigen alternative Ausführungsformen der Verschlusselemente 41, 42, 43. Zur Optimierung des Verlaufes der Querschnittsänderung während der Verstellung des Verschlusselementes kann die Verschlussvorrichtung unterhalb des Ventilsitzes 4 eine gekrümmte Form haben, um einen progressiven Steuerverlauf zu erreichen. Je nach gewünschtem Steuerverlauf kann die Krümmung konkav (Fig. 5b) oder konvex (Fig. 5a, 5c) gestaltet sein oder auch eine Stufenform aufweisen. Um die Abdichtung des Verschlusselementes 41, 42, 43 gegenüber dem gehäuseseitigen Ventilsitz 5 zu verbessern, kann eine Dichtung 15 am Verschlusselement 41, 42, 43 oder am gehäuseseitigen Ventilsitz 5 vorgesehen sein. Hierzu eignen sich einfache Formdichtungen oder O-Ringe (Fig. 5a, 5b) gleichermaßen. Alternativ kann ein Dichtungsmaterial direkt an das Verschlusselement 41, 42, 43 oder den gehäuseseitigen Ventilsitz 5 angespritzt sein, wie in Figur 5c dargestellt.

Zur Versteifung der Verschlusseinrichtung eignet sich ein Einlegteil 20, dass von dem Material des Mitnehmerstiftes 11 umgeben ist. Das Einlegeteil kann beispielsweise ein Metall sein, dass mit dem Kunststoffmaterial des Mitnehmerstiftes 11 im Kunststoffspritzgussverfahren umspritzt wird.

Die verschiedenen Ausführungsformen der Verschlusseinrichtung nach den Figuren 5a bis 5d lassen sich selbstverständlich untereinander beliebig kombinieren.

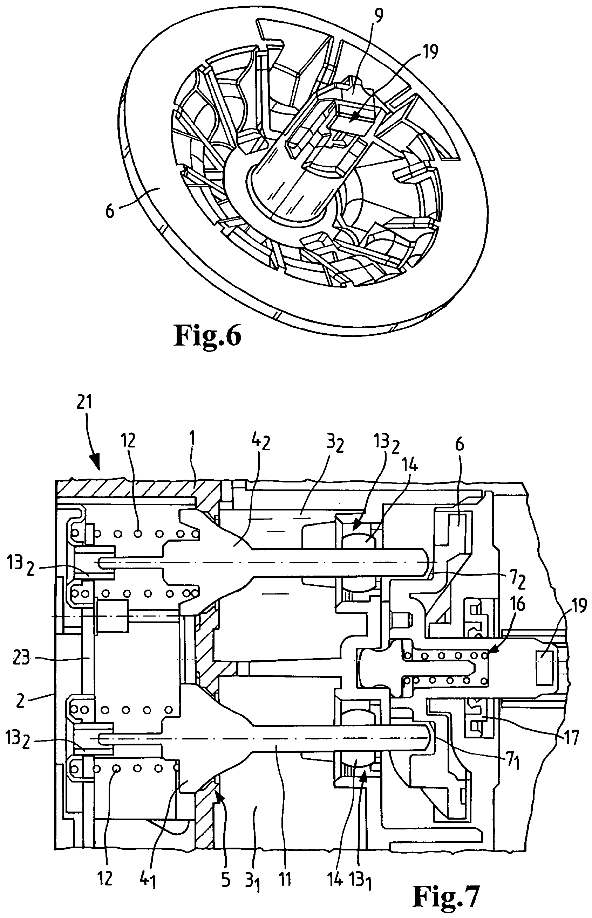

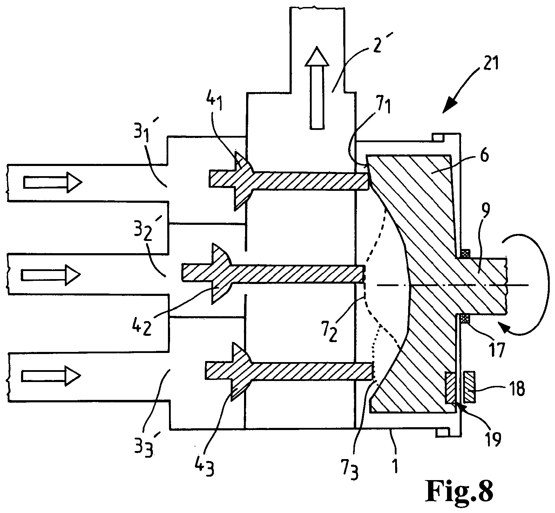

In der Figur 6 ist eine Ansicht einer Nockenscheibe 6 mit der Abtriebswelle 9 gezeigt. Zur Lageerkennung der Nockenscheibe ist an der Abtriebswelle 9 ein Magnet 19 angebracht, der in Zusammenspiel mit einem am Gehäuse 1 angebrachten Hall-Sensor 18 (Prinzipdarstellung in Fig. 8) ein Feedback-Signal über die Stellung der drehbaren Nocken 6 an eine Elektronik liefert. Die Nockenscheibe 6 ist als Kunststoffspritzgussteil ausgeführt.

Die Figur 7 zeigt einen Schnitt durch die Steuerventileinheit 21 entlang der Verstellrichtung der Verschlusselemente 41, 42, 43. Die Flüssigkeit strömt durch die Einlassöffnung 2 in die Steuerventileinheit 21 ein, passiert einen flüssigkeitsdurchlässigen Rahmen 23, der die Lager 132 der Verschlusselemente 41, 42, 43 aufnimmt in Richtung der Verschlusselemente 41, 42, 43. Die Verschlusselemente 41, 42, 43 sind an ihren Enden von einem Lager 131, 132 aufgenommen und werden in geöffneter Stellung mit einer Feder 12 über den Mitnehmerstift 11 gegen die Nockenscheibe 6 und bei geschlossenem Ventil gegen den gehäuseseitigen Ventilsitz 5 gedrückt. Die Nockenscheibe 6 ist mit einer Feder 16 gegen das Lager der Nockenscheibe 6 gedrückt, um ein mögliches Axialspiel auszugleichen. Der Wellendichtring 17 dichtet den flüssigkeitsführenden Innenraum nach außen gegen die Umgebung ab.

In der Figur 8 ist schematisch eine Ausführungsform der erfindungsgemäßen Steuerventileinheit dargestellt, die über zumindest zwei Einlässe 3' und eine Auslassöffnung 2' verfügt. Verschlusselemente 41, 42, 43 dienen der Regelung des Zuflusses einer Flüssigkeit durch die verschiedenen Einlassöffnungen 3' hin zur gemeinsamen Auslassöffnung 2'. Der konstruktive Aufbau dieser Ausführungsform kann gemäß einer Kombination der bereits beschriebenen Ausgestaltungen erfolgen.

## Patentansprüche

1. Steuerventileinheit für einen Flüssigkeitskreislauf einer Brennkraftmaschine, wobei die Steuerventileinheit (21) einerseits ein Ventilgehäuse (1) mit mindestens einer Einlassöffnung (2) oder Auslassöffnung (2') sowie mindestens zwei Auslassöffnungen (31, 32, 33) oder Einlassöffnungen (3'1, 3'2, 3'3) umfasst und mindestens zwei durch eine Steuereinrichtung (22) betätigte Verschlusselemente (41, 42, 43) umfasst, um eine zugehörige Auslassöffnung (31, 32, 33) oder Einlassöffnung (3'1, 3'2, 3'3) selektiv zu öffnen oder zu schließen, wobei jedes dieser Verschlusselemente (41, 42, 43) zwischen einer maximalen Öffnungsposition und einer Schließposition, in welcher es auf einen Sitz (5) gedrückt wird und so diese Durchströmung blockiert, stufenlos verstellt werden kann, **dadurch gekennzeichnet, dass** die Steuereinrichtung (22) aus mindestens einem verschiebbaren oder drehbaren Nocken (6) oder einer rotierenden Nockenscheibe besteht, wobei der Nocken (6) oder die Nockenscheibe mit mindestens zwei Steuerbahnen (71, 72, 73) ausgestattet ist, die jeweils einem Verschlusselement (41, 42, 43) zugeordnet sind und jeweils auf mindestens einem, mit diesem Verschlusselement (41, 42, 43) in Kontakt stehenden Mitnehmerstift (11) wirken, wobei die Verstellung des Nockens (6) durch einem Aktuator (8) erfolgt, wobei der Mitnehmerstift (11) eines jeden Verschlusselementes (41, 42, 43) auf beiden Seiten dieses Elementes in zwei fest mit dem Gehäuse (1) verbundene Führungslager (131, 132) eingebaut ist, wobei bei mindestens einem dieser Führungslager (131, 132) ein Spiel vorgesehen ist, um die Kompensation von Fluchtungsabweichungen des Mitnehmerstiftes (11) oder Orientierungsfehler des Sitzes (5) zu ermöglichen.

2. Steuerventileinheit nach Anspruch 1, **dadurch gekennzeichnet, dass** diese so ausgebildet ist, dass die Kraft des statischen und des dynamischen Druckes, die durch die strömende Flüssigkeit auf die Verschlusselemente (41, 42, 43) ausgeübt wird, dazu tendiert, diese Elemente in ihre Schließposition zu drücken.

3. Steuerventileinheit nach einem der vorherigen Ansprüche, **dadurch gekennzeichnet, dass** der Nocken (6) aus einer Nockenscheibe besteht, die durch den Aktuator (8) in Rotation versetzt werden kann.

4. Steuerventileinheit nach einem der vorherigen Ansprüche, **dadurch gekennzeichnet, dass** das Gehäuse (1) der Steuerventileinheit (21) direkt an einen Motorblock oder einen Zylinderkopf der Brennkraftmaschine angeflanscht ist, wobei die Einlassöffnung (2) oder die Auslassöffnung (2') unmittelbar mit einer Auslassöffnung oder Einlassöffnung des Gegenflansches am Motorblock oder Zylinderkopf korrespondiert, wobei die Flüssigkeit ohne ein zusätzliches Verbindungsstück direkt zwischen der Brennkraftmaschine und der Steuerventileinheit (21) strömt.

5. Steuerventileinheit nach einem der vorherigen Ansprüche, **dadurch gekennzeichnet, dass** zumindest ein Verschlusselement (41, 42, 43) mit einer Fail-Safe-Funktion vorgesehen ist, in der Art, dass es bei einer Funktionsstörung der Steuerventileinheit (21) oder der Brennkraftmaschine eine vorgegebenen Schließ- oder Öffnungsposition einnimmt.

6. Steuerventileinheit nach einem der vorherigen Ansprüche, **dadurch gekennzeichnet, dass** die Verschlusselemente (41, 42, 43) zweiteilig ausgeführt sind, wobei am Mitnehmerstiftes (11) oder im Bereich zwischen Mitnehmerstift (11) und Ventilplatte ein Gelenk angeordnet ist, welches die Druckkräfte von dem Nocken (6) unter Zulassung von Winkelabweichungen auf die Dichtstelle zwischen Verschlusselement (41, 42, 43) und Sitz (5) übertragen kann.

7. Steuerventileinheit nach Anspruch 6 **dadurch gekennzeichnet, dass** das Gelenk gebildet wird aus einem halbkugelförmigen Ende eines Teils des Mitnehmerstiftes und einem pfannenartigen Gegenstück, in dem das halbkugelförmige Ende aufgenommen ist.

8. Steuerventileinheit nach einem der vorherigen Ansprüche, **dadurch gekennzeichnet, dass** zur Detektion der tatsächlichen Stellung des Nocken oder der Verschlusselemente (41, 42, 43) eine Messeinrichtung vorgesehen ist, die ein Signal liefert zur Korrektur der tatsächlichen Nocken- oder Verschlusselementeposition zur gewünschten Nocken- oder Verschlusselementeposition.

9. Steuerventileinheit nach Anspruch 8 **dadurch gekennzeichnet, dass** die Messeinrichtung zumindest einem Hall-Sensor (18) und zumindest einen korrespondierenden Magneten (19) aufweist, der an dem Nocken (6), einem Mitnehmerstift (11) oder der Abtriebswelle (9) angeordnet ist.

10. Steuerventileinheit nach Anspruch 9, **dadurch gekennzeichnet, dass** Teile der Messeinrichtung, insbesondere ein Magnet (19), in einem flüssigkeitsumströmten Innenraum der Steuerventileinheit (21) und andere Teile der Messeinrichtung, insbesondere der Hall-Sensor (18), durch eine Wand getrennt außerhalb des flüssigkeitsumströmten Innenraumes der Steuerventileinheit (21) angeordnet sind.

11. Steuerventileinheit nach einem der vorherigen Ansprüche, **dadurch gekennzeichnet, dass** die Flüssigkeit entweder aus einer gemeinsamen Einlassöffnung (2) unmittelbar vor den Verschlusselementen (41, 42, 43) stromabwärts der Verschlusselemente (41, 42, 43) in separate Auslassöffnungen (31, 32, 33) strömt oder die Flüssigkeit aus separaten Einlassöffnungen (3'1, 3'2, 3'3) stromaufwärts der Verschlusselemente (41, 42, 43) unmittelbar nach den Verschlusselementen (41, 42, 43) in eine gemeinsames Auslassöffnung (2') strömt.

12. Steuerventileinheit nach einem der vorherigen Ansprüche, **dadurch gekennzeichnet, dass** die Steuerventileinheit (21) bezogen auf die durchströmende Flüssigkeit stromaufwärts der Brennkraftmaschine angeordnet ist.

13. Steuerventileinheit nach einem der Ansprüche 1 bis 12 **dadurch gekennzeichnet, dass** die Steuerventileinheit (21) bezogen auf die durchströmende Flüssigkeit stromabwärts der Brennkraftmaschine angeordnet ist.

14. Steuerventileinheit nach einem der vorherigen Ansprüche, **dadurch gekennzeichnet, dass** ein oder mehrere Nockenbahnen (71, 72, 73) der Steuereinrichtung (22) relativ zueinander verstellbar sind oder/und eine oder mehrere Nockenbahnen (71, 72, 73) auskoppelbar sind zur Deaktivierung von zumindest einem der Verschlusselemente (41, 42, 43) zur Veränderung des Steuerverhaltens der einzelnen Verschlusselemente (41, 42, 43) bezogen auf den Nocken (6).

15. Steuerventileinheit nach einem der vorherigen Ansprüche, **dadurch gekennzeichnet, dass** die Steuereinrichtung (22) in Richtung der Stellrichtung der Verschlusselemente (41, 42, 43) verstellbar gelagert ist, wobei sich der Abstand und somit der Durchflussquerschnitt zwischen Sitz (5) und dem zugehörigen Verschlusselement (41, 42, 43) ändert.

16. Steuerventileinheit nach einem der vorherigen Ansprüche, **dadurch gekennzeichnet, dass** die Steuerventileinheit (21) einen Temperatursensor (10) aufweist und eine Regeleinrichtung vorgesehen ist, die zumindest ein Verschlusselement (41, 42, 43) zeitweise in Intervallen zur Kontaktierung des Temperatursensors (10) mit der Flüssigkeit aus dem Kreislauf der Brennkraftmaschine zur Erfassung der Temperatur des Flüssigkeit während der eigentlichen Schließstellung der Verschlusselemente öffnet.

## Claims

1. Control valve unit for a liquid circuit of an internal combustion engine, wherein the control valve unit (21) comprises on the one hand a valve housing (1) with at least one inlet opening (2) or outlet opening (2') as well as at least two outlet openings (31, 32, 33) or inlet openings (3'1, 3'2, 3'3) and comprises at least two closing elements (41, 42, 43) actuated by a control device (22) to selectively open or close an associated outlet opening (31, 32, 33) or inlet opening (3'1, 3'2, 3'3), wherein each of these closing elements (41, 42, 43) can be continuously adjusted between a maximum opened position and a closed position in which it is pressed onto a seat (5) thus blocking this throughflow, **characterized in that** the control device (22) consists of at least one slidable or rotatable cam (6) or one rotatable cam disk, wherein the cam (6) or the cam disk is equipped with at least two control paths (71, 72, 73) which are each associated to a closing element (41, 42, 43) and act each on at least one driving pin (11) which is in contact with this closing element (41, 42, 43), wherein the adjustment of the cam (6) is realized by an actuator (8), wherein the driving pin (11) of each closing element (41, 42, 43) is integrated on both sides of this element in two guide bearings (131, 132) firmly connected to the housing (1), wherein at least one of these guide bearings (131, 132) is provided with a play to allow a compensation of alignment deviations of the driving pin (11) or of orientation errors of the seat (5).

2. Control valve unit according to claim 1, **characterized in that** it is designed in such a way that the force of the static and dynamic pressure applied by the flowing liquid on the closing elements (41, 42, 43) tends to push these elements into their closed position.

3. Control valve unit according to one of the above claims, **characterized in that** the cam (6) consists of a cam disk which can be put into rotation by the actuator (8).

4. Control valve unit according to one of the above claims, **characterized in that** the housing (1) of the control valve unit (21) is directly flange-mounted on an engine block or on a cylinder head of the internal combustion engine, wherein the inlet opening (2) or the outlet opening (2') corresponds directly with an outlet opening or an inlet opening of the mating flange at the engine block or at the cylinder head, wherein the liquid flows directly between the internal combustion engine and the control valve unit (21) without an additional connecting piece.

5. Control valve unit according to one of the above claims, **characterized in that** at least one closing element (41, 42, 43) is provided with a fail-save function such that, in case of a malfunction of the control valve unit (21) or of the internal combustion engine, it takes a predefined closed or opened position.

6. Control valve unit according to one of the above claims, **characterized in that** the closing elements (41, 42, 43) are made of two pieces, wherein at the driving pin (11) or in the area between driving pin (11) and valve shim a joint is disposed, which can transmit the compressive forces from the cam (6) to the sealing area between closing element (41, 42, 43) and seat (5) by accepting angular deviations.

7. Control valve unit according to claim 6, **characterized in that** the joint is made of a hemispherical end of one part of the driving pin and of a pan-like counter member in which the hemispherical end is accommodated.

8. Control valve unit according to one of the above claims, **characterized in that** for detecting the actual position of the cam or the closing elements (41, 42, 43) a measuring device is provided which delivers a signal for correcting the actual cam or closing element position with respect to the desired cam or closing element position.

9. Control valve unit according to claim 8, **characterized in that** the measuring device features at least one Hall sensor (18) and at least one corresponding magnet (19) which is disposed at the cam (6), at a driving pin (11) or at the output shaft (9).

10. Control valve unit according to claim 9, **characterized in that** some parts of the measuring device, in particular a magnet (19), are disposed in an interior space of the control valve unit (21) flowed around by the liquid and that other parts of the measuring device, in particular the Hall sensor (18), are disposed, separated by a wall, outside of the interior space of the control valve unit (21) flowed around by the liquid.

11. Control valve unit according to one of the above claims, **characterized in that** the liquid flows either from a common inlet opening (2) directly in front of the closing elements (41, 42, 43) disposed downstream of the closing elements (41, 42, 43) into separate outlet openings (31, 32, 33) or that the liquid flows from separate inlet openings (3'1, 3'2, 3'3) disposed upstream of the closing elements (41, 42, 43) directly after the closing elements (41, 42, 43) into a common outlet opening (2').

12. Control valve unit according to one of the above claims, **characterized in that** the control valve unit (21) is disposed, with regard to the liquid passing therethrough, upstream of the internal combustion engine.

13. Control valve unit according to one of the claims 1 to 12, **characterized in that** the control valve unit (21) is disposed, with regard to the liquid passing therethrough, downstream of the internal combustion engine.

14. Control valve unit according to one of the above claims, **characterized in that** one or more cam paths (71, 72, 73) of the control device (22) are adjustable relative to each other or/and that one or more cam paths (71, 72, 73) can be coupled out for deactivating at least one of the closing elements (41, 42, 43) for modifying the control behavior of the individual closing elements (41, 42, 43) with regard to the cam (6).

15. Control valve unit according to one of the above claims, **characterized in that** the control device (22) is mounted adjustably in the direction of the adjusting direction of the closing elements (41, 42, 43), wherein the distance and thus the flow cross-section between the seat (5) and the associated closing element (41, 42, 43) changes.

16. Control valve unit according to one of the above claims, **characterized in that** the control valve unit (21) features a temperature sensor (10) and that a control system is provided which opens at least temporarily a closing element (41, 42, 43) at intervals for bringing the temperature sensor (10) into contact with the liquid from the circuit of the internal combustion engine for detecting the temperature of the liquid during the actual closed position of the closing elements.

## Revendications

1. Soupape de contrôle pour un circuit hydraulique d'un moteur à combustion interne, la soupape de contrôle (21) comprenant d'une part une cage de soupape (1) avec au moins une ouverture d'admission (2) ou une ouverture de sortie (2') ainsi qu'au moins deux ouvertures de sortie (31, 32, 33) ou ouvertures d'admission (3'1, 3'2, 3'3) et comprenant au moins deux éléments de fermeture (41, 42, 43) actionnés par un dispositif de commande (22) pour ouvrir ou fermer sélectivement une ouverture de sortie (31, 32, 33) ou une ouverture d'admission (3'1, 3'2, 3'3) associée, chacun de ces éléments de fermeture (41, 42, 43) pouvant être réglé en continu entre une position d'ouverture et une position de fermeture maximale dans laquelle il est forcé sur un logement (5) ainsi bloquant ce flux, **caractérisée en ce que** le dispositif de commande (22) est constitué d'au moins une came (6) déplaçable ou rotative ou d'un disque à cames rotatif, la came (6) ou le disque à cames étant équipé d'au moins deux voies de commande (71, 72, 73) associées chacune à un élément de fermeture (41, 42, 43) et agissant chacune au moins sur une broche d'entraînement (11) qui est en contact avec cet élément de fermeture (41, 42, 43), le réglage de la came (6) étant effectué par un actionneur (8), la broche d'entraînement (11) de chacun des éléments de fermeture (41, 42, 43) étant installée sur les deux côtés de cet élément dans deux paliers-guides (131, 132) reliés de manière fixe au boîtier (1), chez au moins un de ces paliers-guides (131, 132) étant prévu un jeu pour permettre une compensation des écarts d'alignement de la broche d'entraînement (11) ou des erreurs d'orientation du logement (5).

2. Soupape de contrôle selon la revendication 1, **caractérisée en ce qu'**elle est réalisée de telle sorte que la force de la pression statique et dynamique exercée par le liquide sur les éléments de fermeture (41, 42, 43) tend à forcer ces éléments dans leur position de fermeture.

3. Soupape de contrôle selon l'une des revendications précédentes, **caractérisée en ce que** la came (6) est constituée d'un disque à cames qui peut être mis en rotation par l'actionneur (8).

4. Soupape de contrôle selon l'une des revendications précédentes, **caractérisée en ce que** le boîtier (1) de la soupape de contrôle (21) est directement fixé par bride à un bloc du moteur ou à une culasse de cylindre du moteur à combustion interne, l'ouverture d'admission (2) ou l'ouverture de sortie (2') correspondant directement avec une ouverture de sortie ou une ouverture d'admission de la contrebride sur le bloc du moteur ou sur la culasse de cylindre, le liquide coulant sans une pièce de raccordement supplémentaire directement entre le moteur à combustion interne et la soupape de contrôle (21).

5. Soupape de contrôle selon l'une des revendications précédentes, **caractérisée en ce qu'**au moins un élément de fermeture (41, 42, 43) est muni d'une fonction fail-safe de telle sorte qu'il prend, lors d'une défaillance de la soupape de contrôle (21) ou du moteur à combustion interne, une position de fermeture ou d'ouverture prédéfinie.

6. Soupape de contrôle selon l'une des revendications précédentes, **caractérisée en ce que** les éléments de fermeture (41, 42, 43) sont formés de deux éléments, une articulation, qui peut transmettre les forces de pression de la came (6) sur la zone d'étanchéité entre l'élément de fermeture (41, 42, 43) et le logement (5) en acceptant des écarts angulaires, étant disposée sur la broche d'entraînement (11) ou dans la zone entre la broche d'entraînement (11) et la lame de soupape.

7. Soupape de contrôle selon la revendication 6, **caractérisée en ce que** l'articulation est constituée d'une extrémité hémisphérique d'une partie de la broche d'entraînement et d'un contre-élément en forme de cuvette dans lequel l'extrémité hémisphérique est logée.

8. Soupape de contrôle selon l'une des revendications précédentes, **caractérisée en ce qu'**un dispositif de mesure, qui fournit un signal pour corriger la position réelle de la came ou de l'élément de fermeture par rapport à la position souhaitée de la came ou des éléments de fermeture, est prévu pour détecter la position réelle de la came ou des éléments de fermeture (41, 42, 43).

9. Soupape de contrôle selon la revendication 8, **caractérisée en ce que** le dispositif de mesure présente au moins un capteur de Hall (18) et au moins un aimant (19) correspondant qui est disposé sur la came (6), sur une broche d'entraînement (11) ou sur un arbre de sortie (9).

10. Soupape de contrôle selon la revendication 9, **caractérisée en ce que** des éléments du dispositif de mesure, notamment un aimant (19), sont disposés dans un espace intérieur de la soupape de contrôle (21) contourné par le liquide et que d'autres éléments du dispositif de mesure, notamment le capteur de Hall (18), sont disposés, séparés par une paroi, à l'extérieur de l'espace intérieur de la soupape de contrôle (21) contourné par le liquide.

11. Soupape de contrôle selon l'une des revendications précédentes, **caractérisée en ce que** le liquide coule ou bien d'une ouverture d'admission (2) commune directement devant les éléments de fermeture (41, 42, 43) située en aval des éléments de fermeture (41, 43, 43) dans des ouvertures de sortie séparées (31, 32, 33) ou bien que le liquide coule des ouvertures d'admission (3'1, 3'2, 3'3) situées en amont des éléments de fermeture (41, 42, 43) directement après les éléments de fermeture (41, 42, 43) dans une ouverture de sortie (2') commune.

12. Soupape de contrôle selon l'une des revendications précédentes, **caractérisée en ce que** la soupape de contrôle (21) est disposée, par rapport au liquide passant à travers, en amont du moteur à combustion interne.

13. Soupape de contrôle selon l'une des revendications 1 à 12, **caractérisée en ce que** la soupape de contrôle (21) est disposée, par rapport au liquide passant à travers, en aval du moteur à combustion interne.

14. Soupape de contrôle selon l'une des revendications précédentes, **caractérisée en ce qu'**une ou plusieurs pistes à cames (71, 72, 73) du dispositif de commande (22) sont réglables l'une par rapport à l'autre ou/et qu'une ou plusieurs pistes à cames (71, 72, 73) peuvent être découplées pour désactiver au moins l'un des éléments de fermeture (41, 42, 43) pour modifier le comportement de la commande des éléments de fermeture individuels (41, 42, 43) par rapport á la came (6).

15. Soupape de contrôle selon l'une des revendications précédentes, **caractérisée en ce que** le dispositif de commande (22) est logé de manière réglable dans la direction de réglage des éléments de fermeture (41, 42, 43), la distance et par conséquent la section de passage entre le logement (5) et l'élément de fermeture associé (41, 42, 43) étant modifiée.

16. Soupape de contrôle selon l'une des revendications précédentes, **caractérisée en ce que** la soupape de contrôle (21) présente un capteur de température (10) et qu'un dispositif de réglage est prévu qui ouvre au moins un élément de fermeture (41, 42, 43) temporairement par intervalles pour mettre en contact le capteur de température (10) avec le liquide du circuit du moteur à combustion interne pour la détection de la température du liquide pendant la position de fermeture proprement dite des éléments de fermeture.
